# FASCICULE DE BREVET EUROPEEN

(11) **EP 1 697 944 B1**
(45) Date de publication et mention de la délivrance du brevet: **23.02.2011**
(21) Numéro de dépôt: 04805622.0
(22) Date de dépôt: 02.12.2004
(51) Int. Cl.: G21C 3/17

(54) **CRAYON DE COMBUSTIBLE POUR UN REACTEUR NUCLEAIRE**
BRENNSTOFF-STIFT FÜR EINEN KERNREAKTOR
FUEL PENCIL FOR A NUCLEAR REACTOR

(30) Priorité: 22.12.2003 FR 0315185
(43) Date de publication de la demande: 06.09.2006
(73) Titulaire: Areva NP, 92400 Courbevoie (FR)
(72) Inventeur: BLAUDIN DE THE, François, F-69370 Saint Didier Au Mont D'or (FR)
(74) Mandataire: Domenego, Bertrand
(86) Numéro de dépôt international: PCT/FR2004/003103
(87) Numéro de publication internationale: WO 2005/071691

(56) Documents cités:
- DE-C- 19 848 581
- NL-A- 7 702 531
- US-A- 3 804 710
- US-A- 4 046 631
- US-A- 4 111 748

## Description

L'invention concerne un crayon de combustible pour un réacteur nucléaire refroidi par de l'eau et en particulier pour un réacteur nucléaire refroidi par de l'eau sous pression.

Les réacteurs nucléaires refroidis par de l'eau sous pression comportent un coeur constitué par des assemblages de combustible, chaque assemblage de combustible étant lui-même constitué par un faisceau de crayons de combustibles maintenus dans une ossature de l'assemblage de combustible de manière que les crayons de forme cylindrique aient leurs axes parallèles entre eux.

Chacun des crayons de combustible comporte une gaine tubulaire cylindrique rectiligne dont la longueur axiale est très supérieure au diamètre de la section. Généralement, les crayons de combustible ont une longueur supérieure à 4 m et un diamètre de l'ordre de 10 mm. Les crayons de combustible comportent, à l'intérieur de la gaine tubulaire, une colonne de pastilles de combustible nucléaire empilées l'une sur l'autre dans la direction axiale de la gaine qui est fermée, de manière étanche, à ses extrémités axiales par des bouchons. Dans sa position de service dans un assemblage de combustible à l'intérieur du coeur du réacteur nucléaire, le crayon de combustible est disposé avec son axe vertical, de sorte qu'un premier bouchon de fermeture du crayon est à sa partie inférieure et constitue le bouchon inférieur et que le second bouchon, situé à la partie supérieure du crayon de combustible en position de service, constitue le bouchon supérieur.

La colonne de pastilles de combustible repose par une première extrémité, inférieure, sur une surface d'extrémité d'une partie du bouchon inférieur engagée à l'intérieur de la gaine du crayon de combustible. La colonne de pastilles de combustible est maintenue à l'intérieur du crayon de combustible par un ressort hélicoïdal de compression intercalé entre une seconde extrémité, supérieure, de la colonne de pastilles de combustible et une surface d'extrémité d'une partie interne du bouchon supérieur de fermeture du crayon.

Pour réaliser le remplissage des crayons lors de leur fabrication, on peut fermer l'une des extrémités de la gaine tubulaire du crayon, par exemple la première extrémité, inférieure, en engageant le bouchon inférieur dans une extrémité de la gaine tubulaire et en le fixant sur la gaine par soudage. On introduit ensuite, à l'intérieur de la gaine, les pastilles de combustible qui sont empilées l'une sur l'autre sous la forme d'une colonne dont la pastille inférieure repose sur le bouchon inférieur du crayon. On effectue ensuite la mise en place du ressort et la fixation du bouchon supérieur puis on évacue les gaz à l'intérieur de la gaine, généralement par un canal ménagé à travers le bouchon supérieur, on introduit un gaz inerte, par exemple de l'hélium sous pression, à l'intérieur de la gaine du crayon, et on réalise la fermeture étanche du crayon par soudage d'un queusot à l'extrémité du canal traversant le bouchon supérieur.

A l'intérieur du crayon, les pastilles de combustible sont en contact avec de l'hélium sous pression qui réduit ou empêche l'oxydation des pastilles. Le gaz inerte remplit toutes les parties de la gaine qui ne sont pas occupées par la colonne de pastilles de combustible et le ressort de maintien. En particulier, de l'hélium sous pression remplit l'espace ménagé entre l'extrémité supérieure de la colonne de pastilles de combustible et l'extrémité de la partie interne du bouchon supérieur, dans lequel est disposé le ressort de compression assurant le maintien de la colonne de pastilles de combustible. Cet espace constitue un collecteur de gaz ou plenum dans lequel se rassemblent les gaz dégagés par les pastilles de combustible, pendant l'utilisation du crayon de combustible dans le coeur d'un réacteur nucléaire. Certains gaz peuvent être formés en particulier par des réactions de fission de certains éléments contenus dans les pastilles de combustible. La pression à l'intérieur de la gaine du crayon a donc tendance à augmenter du fait du dégagement de gaz par la colonne de pastilles de combustible et il est nécessaire de prévoir un plenum d'un volume suffisant pour éviter une trop forte pressurisation interne du crayon en service.

Dans le cas des crayons de combustible dont les pastilles renferment un oxyde mixte d'uranium et de plutonium ou un mélange d'oxydes d'uranium et de plutonium (combustible MOX), le volume du plenum entre la partie supérieure de la colonne de pastilles de combustible et la surface d'extrémité de la partie interne du bouchon supérieur des crayons de combustible est généralement insuffisant pour assurer une tenue parfaite du crayon en service. Il n'est pas possible en effet d'augmenter de manière significative la longueur de cet espace et donc la longueur du ressort, ce qui n'est de toutes façons pas souhaitable, dans la mesure où cet allongement du plenum supérieur et du ressort entraînerait des modifications de conception des crayons et nécessiterait une fabrication particulière des éléments constitutifs des crayons combustibles MOX.

Une méthode habituelle pour augmenter le volume d'expansion des gaz à l'intérieur des crayons de combustible MOX consiste à intercaler, entre la surface d'extrémité supérieure du bouchon inférieur à l'intérieur de la gaine et la première extrémité, inférieure, de la colonne de pastilles de combustible, une entretoise ou cale en acier inoxydable ou en alliage de zirconium, constituée par un tube ayant une paroi épaisse. De cette manière, le crayon de combustible MOX comporte à la fois un plenum supérieur et un plenum inférieur s'étendant entre l'extrémité inférieure de la colonne de combustible et l'extrémité supérieure de la partie interne du bouchon inférieur, ce qui a pour avantage d'améliorer la diffusion des gaz des pastilles vers le plenum inférieur complémentaire du plenum supérieur du crayon, d'équilibrer le comportement hydraulique et thermique du crayon et de diminuer la température en service de la partie inférieure du crayon de combustible.

Toutefois, ce mode de réalisation des crayons de combustible MOX a pour inconvénient de nécessiter la fabrication, le stockage et la mise en place de cales tubulaires, lors de la fabrication industrielle des crayons de combustible. La gestion de la production est rendue pl us compliquée et des contrôles doivent être effectués si l'on veut éviter tout risque de défaut de fabrication, tel que l'oubli d'une cale, lors de la fabrication d'un crayon.

On a également proposé, par exemple dans les EP-0.169.422 et JP-298.792, de prévoir, dans des bouchons inférieurs ou supérieurs de crayons combustibles, des cavités accroissant le volume d'expansion des gaz aux extrémités du crayon. De telles cavités qui s'étendent aussi bien dans la partie du bouchon introduite dans la gaine que dans la partie du bouchon extérieure à la gaine se traduisent par une modification sensible de la conception des bouchons. L'accroissement du volume d'expansion par des cavités usinées dans les bouchons peut être combiné à l'utilisation d'entretoises creuses à l'intérieur de la gaine, entre un bouchon et la colonne de pastilles de combustible.

US-3 804 710 décrit un crayon de combustible dont la structure du bouchon inférieur permet de réduire en service le gradient de température dans la soudure entre le bouchon et la gaine et donc de limiter les contraintes dans la soudure ou à proximité de celle-ci.

US-4 046 631 décrit un crayon de combustible avec une structure de bouchon qui permet d'adsorber de l'hydrogène éventuellement présent à distance de la soudure entre le bouchon et la gaine. Ce document correspond au préambule de la revendication 1.

Le but de l'invention est donc de proposer un crayon de combustible pour un réacteur nucléaire refroidi par de l'eau comportant une gaine tubulaire cylindrique, une colonne de pastilles de combustible nucléaire empilées l'une sur l'autre à l'intérieur de la gaine tubulaire, dans la direction axiale de la gaine, un premier bouchon de fermeture étanche d'une première extrémité axiale de la gaine du crayon disposé à la partie inférieure du crayon de combustible dans une position de service du crayon à l'intérieur du réacteur nucléaire, la gaine du crayon ayant son axe vertical, et un second bouchon de fermeture étanche de la seconde extrémité axiale de la gaine, la colonne de pastilles de combustible reposant sur une partie interne à la gaine, du premier bouchon, appelé bouchon inférieur, par une première extrémité, inférieure, et étant maintenue à l'intérieur de la gaine tubulaire par un ressort de compression Intercalé entre une seconde extrémité axiale, supérieure, de la colonne de pastilles de combustible et une partie d'extrémité interne du second bouchon appelé bouchon supérieur, ce crayon de combustible comportant un plenum inférieur obtenu sans utilisation d'une cale tubulaire et sans usinage d'une cavité dans le bouchon inférieur.

Dans ce but, l'invention a pour objet un crayon de combustible selon la revendication 1.

Selon des modalités particulières prises isolément ou en combinaison, le crayon peut comporter les caractéristiques des revendications 2 à 4.
La figure 1A est une vue en coupe axiale partielle d'un crayon de combustible suivant l'art antérieur.
La figure 1 B est une vue en coupe axiale partielle d'un crayon de combustible MOX, suivant l'art antérieur.
La figure 2 est une vue en coupe axiale partielle d'une partie inférieure d'un crayon de combustible suivant l'invention.
La figure 3 est une vue en coupe axiale schématique de la partie interne du bouchon inférieur d'un crayon de combustible suivant l'invention introduite à l'intérieur de la gaine tubulaire, lors de la mise en place du bouchon.

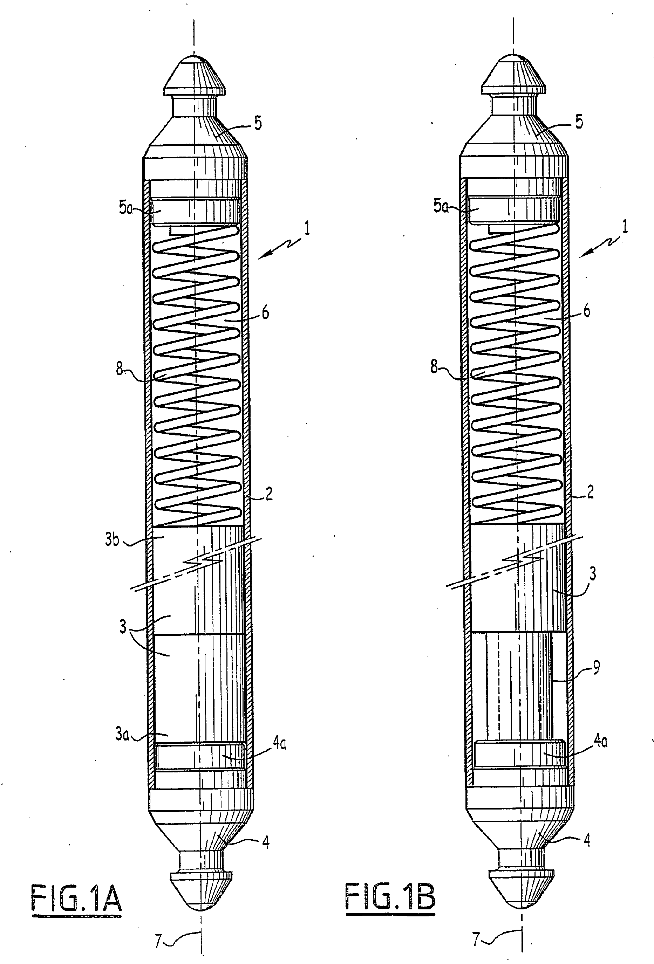

Sur la figure 1 A, on a représenté un crayon de combustible d'un réacteur nucléaire à eau sous pression désigné de manière générale par le repère 1.

Le crayon de combustible 1 comporte une gaine tubulaire 2, renfermant une colonne de pastilles de combustible 3 qui est fermée, respectivement, à une première extrémité axiale, par un premier bouchon 4 et, à une seconde extrémité axiale, par un second bouchon 5. La gaine tub ulaire 2 est constituée par un tube en alliage de zirconium ayant une longueur supérieure à 4 m et un diamètre intérieur inférieur à 10 mm.

Les pastilles de combustible 3 de forme générale cylindrique ont un diamètre sensiblement égal au diamètre intérieur de la gaine tubulaire 2, compte tenu d'un très léger jeu diamétral permettant, d'une part, d'engager facilement les pastilles de combustible à l'intérieur de la gaine lors du remplissage du crayon et de minimiser les interactions entre les surfaces latérales des pastilles et la gaine, lors du gonflement sous irradiation des pastilles, lorsque le crayon est en position de service dans le coeur d'un réacteur nucléaire.

La colonne de pastilles de combustible repose, par son extrémité inférieure (surface inférieure de la première pastille de combustible 3a), sur une surface d'extrémité sensiblement plane d'une partie interne 4a du bouchon 4 engagée à l'intérieur de la gaine tubulaire 2.

Les pastilles de combustible 3 sont empilées l'une sur l'autre à l'intérieur de la gaine 2, dans la direction de l'axe 7 de la gaine tubulaire constituant l'axe vertical du crayon en position de service.

L'extrémité supérieure de la colonne de pastilles de combustible constituée par la surface supérieure de la pastille de combustible 3b disposée à la partie supérieure de la colonne de pastilles est à une certaine distance de la surface d'extrémité d'une partie interne 5a du bouchon supérieur engagée à l'intérieur de la gaine 2, lors de la fermeture du crayon, de sorte qu'un espace libre 6 est ménagé entre l'extrémité de la colonne de combustible et la surface d'extrémité de la partie interne du bouchon supérieur 5. Dans l'espace libre 6 est disposé un ressort hélicoïdal 8 qui est comprimé lors de la mise en place du bouchon supérieur 5 entre la surface d'extrémité de la partie interne 5a du bouchon supérieur 5 et l'extrémité supérieure de la colonne de pastilles de combustible 3.

Les bouchons inférieur 4 et supérieur 5 dont les parties internes présentant un diamètre sensiblement égal au diamètre intérieur de la gaine 2 sont engagées dans la première et dans la seconde parties d'extrémité de la gaine 2, respectivement, sont soudés sur la gaine, par exemple par soudage par un faisceau laser.

Après soudage du bouchon supérieur 5, les gaz contenus dans la gaine 2 sont évacués par un canal traversant le bouchon 5 et remplacés par de l'hélium sous pression évitant toute oxydation des pastilles de combustible lors de l'utilisation du crayon dans le réacteur nucléaire. Après remplissage par de l'hélium sous pression, l'extrémité du canal ou queusot est fermée par soudure.

Dans la position de service du crayon de combustible 1, à l'intérieur du réacteur nucléaire, l'axe 7 du crayon est vertical, la première extrémité du crayon fermée par le premier bouchon ou bouchon inférieur est à la partie inférieure du crayon et la seconde partie d'extrémité du crayon de combustible fermée par le second bouchon ou bouchon supérieur 5 est à la partie supérieure du crayon.

Lors de l'utilisation du crayon dans un réacteur nucléaire, les gaz formés dans les pastilles de la gaine de combustible se dégagent et se rassemblent dans le plenum 6 dont le volume est généralement suffisant pour limiter une montée de la pression jusqu'à un niveau excessif à l'intérieur de la gaine 2 du crayon.

Dans le cas de crayons combustibles MOX, c'est-à-dire de crayons dont les pastilles de combustible 3 ou au moins une partie des pastilles renferme de l'oxyde de plutonium, l'utilisation d'un seul plenum supérieur 6 s'avère généralement insuffisante et un plenum inférieur est réalisé en intercalant une cale tubulaire ayant une paroi de forte épaisseur (pour des questions de tenues mécanique et thermique) entre la première extrémité, ou extrémité inférieure, de la colonne de pastilles et la surface d'extrémité de la partie interne 4a du bouchon inférieur 4.

Sur la figure 1B, on a représenté une cale tubulaire 9 pouvant délimiter un plenum inférieur dans le crayon 1 et qui est substituée à des pastilles de combustible à la partie inférieure de la colonne de pastilles 3.

On a indiqué ci-dessus les inconvénients de l'utilisation d'une telle cale ou entretoise tubulaire.

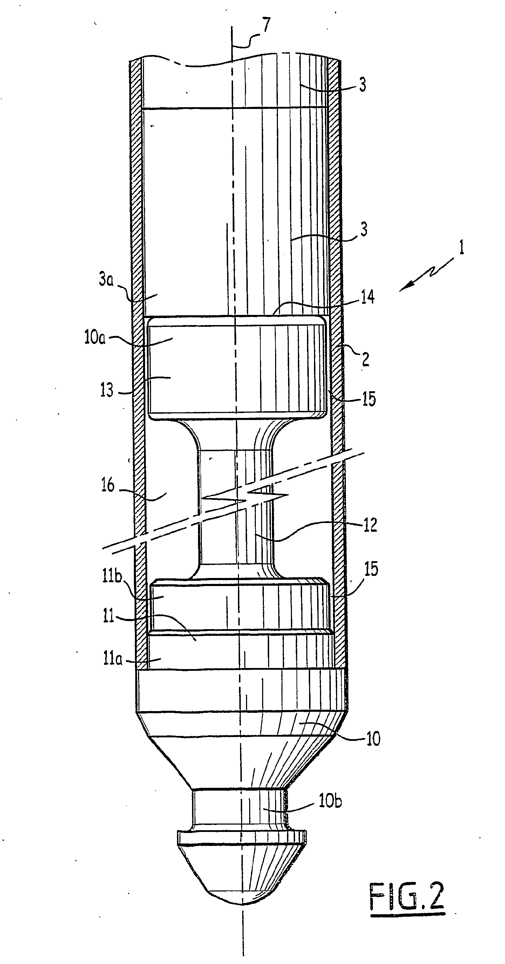

Sur la figure 2, on a représenté la partie inférieure d'un crayon de combustible suivant l'invention qui peut être utilisé comme crayon de combustible MOX. Les éléments correspondants sur les figures 1A et 1B représentant un crayon de combustible suivant l'art antérieur et sur la figure 2 représentant la partie inférieure d'un crayon de combustible suivant l'invention sont désignés par les mêmes repères.

Le crayon de combustible 1 suivant l'invention dont la partie inférieure est représentée sur la figure 2 ne diffère du crayon 1 suivant l'art antérieur représenté sur la figure 1 que par la forme de réalisation de son bouchon inférieur 10.

Le bouchon inférieur 10 du crayon de combustible suivant l'invention peut être avantageusement réalisé en une seule pièce, par exemple par usinage d'une ébauche en alliage de zirconium.

Dans le cas où le crayon 1 suivant l'invention est un crayon MOX, c'est-à-dire dans le cas où les pastilles de combustible 3 du crayon renferment de l'oxyde de plutonium, la forme du bouchon 10 qui sera décrit ci-dessous permet d'éviter l'utilisation d'une cale ou entretoise tubulaire 9.

Le bouchon inférieur 10 du crayon 1 suivant l'invention comporte une partie interne 10a qui est introduite à l'intérieur de la première extrémité de la gaine 2 et une partie externe 10b restant à l'extérieur de la gaine après mise en place du bouchon inférieur. Le bouchon 10 présente dans son ensemble une forme de révolution autour de l'axe 7 du crayon. La partie externe 10b présente une extrémité arrondie et une gorge permettant la préhension du crayon par un grappin de manutention. Le bouchon supérieur du crayon, analogue au bouchon supérieur 5 du crayon suivant l'art antérieur représenté sur la figure 1, comporte également une gorge de préhension et une extrémité arrondie. Les crayons de combustible peuvent ainsi être pris en charge par une machine de manutention à grappin, aussi bien par l'intermédiaire de leur extrémité supérieure que par l'intermédiaire de leur extrémité inférieure.

La partie interne 10a du bouchon 10 introduite à l'intérieur de la gaine lors de la mise en place du bouchon comporte trois tronçons successifs 11, 12, 13, dans la direction axiale 7 du bouchon et du crayon de combustible; de forme générale cylindrique qui se distinguent l'un de l'autre en particulier par leur diamètre extérieur.

Le premier tronçon 11 de la partie 10a engagée par la première extrémité de la gaine 2 dans sa partie inférieure et le troisième tronçon 13 disposé le plus à l'intérieur de la gaine 2 vers sa seconde extrémité présentent l'un et l'autre un diamètre sensiblement égal ou un peu inférieur au diamètre intérieur de la gaine 2. On entend ici par diamètre sensiblement égal au diamètre intérieur de la gaine 2, soit un diamètre parfaitement égal au diamètre intérieur de la gaine 2, soit un diamètre très légèrement supérieur au diamètre intérieur de la gaine 2 pour réaliser un engagement en force du bouchon, soit encore un diamètre très légèrement inférieur au diamètre intérieur de la gaine ne différant de ce diamètre que par un jeu permettant le passage de gaz autour du bouchon.

Le second tronçon 12, intermédiaire, du bouchon 10 présente un diamètre sensiblement inférieur au diamètre intérieur de la gaine 2. Par exemple, pour une gaine ayant un diamètre intérieur un peu supérieur à 8 mm, le tronçon intermédiaire 12 du bouchon 10 peut présenter un diamètre de l'ordre de 4 mm. De préférence, le diamètre du tronçon intermédiaire 12 de la partie interne 10a du bouchon est compris entre 40 % et 60 % du diamètre interne de la gaine.

Le premier tronçon 11 de la partie interne 10a du bouchon 10 présente deux parties successives dont le diamètre est sensiblement égal au diamètre intérieur de la gaine 2, comme défini plus haut.

Une première partie 11a du tronçon 11 présente un diamètre tel que le bouchon soit introduit légèrement en force à l'intérieur de la gaine 2, lors de sa mise en place, pour assurer un très bon positionnement du bouchon et en particulier de son épaulement de soudage à l'extrémité de la gaine 2, dans la machine de soudage des bouchons. Le premier tronçon 11 comporte également un second tronçon 11b ayant un diamètre permettant de ménager un très léger jeu de montage 15 (par exemple de l'ordre du dixième de millimètre) entre la surface extérieure de la partie 11b du tronçon 11 et la surface interne de la gaine 2.

Le troisième tronçon 13 de la partie interne 10a du bouchon présente un diamètre extérieur un peu inférieur au diamètre de la partie 11b du tronçon 11 et ménage donc avec la paroi interne de la gaine tubulaire 2 du crayon, après mise en place du bouchon 10, un jeu 15 permettant le passage de gaz provenant de la colonne de pastilles de combustible 3 à la périphérie du troisième tronçon 13. Le jeu radial entre le troisième tronçon du bouchon et la gaine peut être par exemple de l'ordre de 0,15 millimètre et plus généralement selon l'invention compris entre un et deux dixièmes de millimètre. Le troisième tronçon 13 comporte une surface d'extrémité 14 sensiblement plane, sur laquelle vient reposer la première pastille, ou pastille inférieure 3a, de la colonne de pastilles de combustible de crayons de combustible MOX.

Le troisième tronçon 13 peut présenter, de manière alternative, un diamètre sensiblement inférieur au diamètre intérieur de la gaine ; toutefois, le diamètre du troisième tronçon 13 est toujours sensiblement supérieur au diamètre du second tronçon 12.

Du fait que le tronçon intermédiaire 12 présente un diamètre extérieur sensiblement inférieur au diamètre intérieur de la gaine 2, un espace libre annulaire 16 est ménagé entre la surface extérieure du second tronçon, intermédiaire, de la partie interne 10a du bouchon 10, et la surface interne de la gaine tubulaire 2. Cet espace annulaire 16 est en communication, par l'intermédiaire de l'espace annulaire 15 ménagé entre le troisième tronçon 13 de la partie interne 10a du bouchon 10 et la surface interne de la gaine, avec l'espace du crayon renfermant les pastilles de combustible 3.

De ce fait, le gaz de pressurisation (généralement de l'hélium) et les gaz dégagés par les pastilles de combustible en service peuvent venir remplir l'espace 16 qui constitue un espace d'expansion des gaz et donc un collecteur ou plenum complémentaire du plenum supérieur 6 (réalisé de la même manière que le plenum supérieur du crayon suivant l'art antérieur représenté sur la figure 1).

La longueur du second tronçon, intermédiaire 12, de la partie interne 10a du bouchon 10 est déterminée de manière que le volume du plenum complémentaire 16 soit suffisant pour remplir les fonctions voulues quant à l'expansion des gaz dans le crayon de combustible MOX en service dans le réacteur nucléaire. Cette longueur peut être par exemple de 8 à 10 fois le diamètre interne de la gaine du crayon.

Une longueur du tronçon intermédiaire de l'ordre de 70 mm, compte tenu des diamètres de la gaine et du tronçon intermédiaire mentionnés plus haut permet de réserver un espace libre constituant le plenum 16 ayant un volume de l'ordre de 3000 mm³.

Un tel plenum inférieur permet de remplir au mieux les fonctions de plenum complémentaire d'un plenum supérieur 6 analogue au plenum supérieur d'un crayon suivant l'art antérieur.

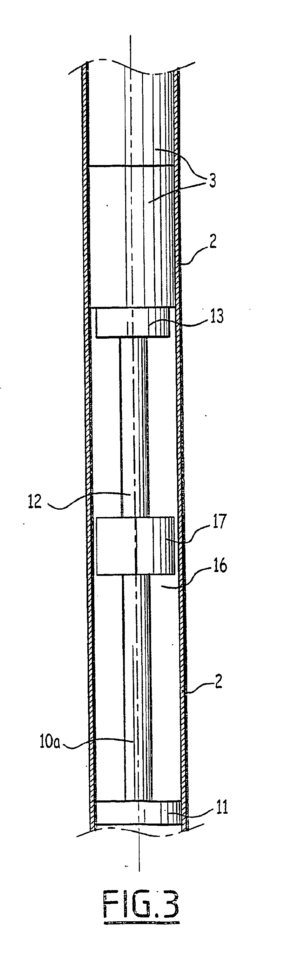

Sur la figure 3, on a représenté de manière schématique la partie interne 10a du bouchon comportant les tronçons cylindriques 11, 12 et 13, le tronçon intermédiaire 12 permettant de ménager, suivant toute sa longueur, l'espace annulaire 16 dans la partie d'extrémité inférieure du crayon de combustible.

De plus, le bouchon 10 comporte, à titre de variante, une entretoise 17 constituée par une partie élargie diamétralement du tronçon 12, qui peut être, de préférence, dans une zone centrale du tronçon 12 sensiblement équidistante des tronçons cylindriques 11 et 13. L'entretoise 17 dont le diamètre extérieur a une longueur égale au diamètre intérieur de la gaine 2 diminué d'un jeu de montage assure le guidage de la partie centrale du bouchon à l'intérieur de la gaine 2 et le passage des gaz et permet d'éviter le flambage de la gaine 2 en service. Il est possible de prévoir plusieurs entretoises analogues à l'entretoise 17 réparties suivant la longueur du tronçon intermédiaire 12.

Le bouchon inférieur 10 du crayon comportant une partie interne 10a fortement allongée présente une forme très différente d'un bouchon suivant l'art antérieur. Toutefois, la pose et la fixation du bouchon inférieur sont réalisées de la même manière que dans le cas d'un bouchon inférieur d'un crayon de combustible suivant l'art antérieur. La partie externe 10b du bouchon se terminant par un épaulement de séparation avec la partie interne 10a, suivant lequel on réalise le soudage d'étanchéité du bouchon inférieur est analogue à la partie extérieure 4b d'un bouchon inférieur 4 suivant l'art antérieur tel que représenté sur la figure 1.

La diminution de la longueur de la colonne de pastilles du fait de l'allongement de la partie interne 10a du bouchon inférieur 10 est compensée par une légère augmentation de l'enrichissement du combustible nucléaire qui est réalisé en particulier dans le cas du combustible MOX.

Du fait des formes et dimensions très différentes des bouchons inférieurs et supérieurs dans le cas des crayons de combustible suivant l'invention, lors de la fabrication, il n'y a pas de risque de mélange et de confusion des deux types de bouchon, lors de leur pose. Certains incidents de fabrication ont été enregistrés dans le passé du fait d'une confusion entre les bouchons inférieurs et supérieurs.

La suppression des cales ou entretoises tubulaires de réservation d'un plenum inférieur des crayons de combustible MOX permet de réaliser des économies sur la fabrication de ces cales et sur les opérations de pose et de contrôle des cales lors de la fabrication des crayons de combustible. On supprime également les risques liés à l'oubli de cales pendant la fabrication des crayons de combustible MOX. Il est également très facile d'augmenter le volume de l'espace libre constituant le plenum inférieur du crayon en augmentant la longueur ou en diminuant le diamètre du tronçon intermédiaire de la partie interne du bouchon inférieur. Le diamètre du tronçon intermédiaire peut être très inférieur au diamètre intérieur de la gaine, la seule limite à la réduction de ce diamètre étant imposée par la résistance mécanique du bouchon inférieur dans le crayon de combustible en service dans le réacteur nucléaire.

Des analyses thermomécaniques de cette nouvelle conception de bouchon inférieur support ont montré qu'elle respecte tous les critères permettant de se prémunir contre les modes de détérioration suivants : déformation excessive et instabilité plastique instantanées et différées et, en particulier, flambage instantané et différé du tronçon du bouchon de plus faible diamètre.

En outre, le bouchon inférieur d'un crayon de combustible suivant l'invention n'entraîne pas de déformation de la gaine et assure un support et un positionnement parfait de la colonne de pastilles de combustible.

L'invention ne se limite pas strictement au mode de réalisation qui a été décrit.

C'est ainsi que la partie interne du bouchon inférieur du crayon de combustible peut avoir une forme différente de celle qui a été décrite, la forme et les dimensions du tronçon intermédiaire en particulier pouvant être différentes des formes et dimensions indiquées plus haut.

De même, le premier tronçon et le second tronçon intermédiaire peuvent avoir toute longueur dans la direction axiale et toute forme permettant d'assurer la fermeture étanche de l'extrémité de la gaine tubulaire en ce qui concerne le premier tronçon cylindrique et le support de la colonne de pastilles de combustible en ce qui concerne le troisième tronçon cylindrique.

La gaine et les bouchons du crayon de combustible suivant l'invention sont généralement réalisés en alliage de zirconium mais il est possible d'envisager d'autres matériaux, en fonction de l'utilisation du crayon de combustible.

L'invention s'applique non seulement aux éléments de combustible pour réacteur nucléaire à eau sous pression mais également à tout élément de combustible pour des réacteurs nucléaires refroidis par de l'eau réalisé

## Revendications

1. Crayon de combustible pour un réacteur nucléaire refroidi par de l'eau comportant une gaine tubulaire cylindrique (2), une colonne de pastilles de combustible nucléaire (3) empilées l'une sur l'autre à l'intérieur de la gaine tubulaire (2) dans la direction axiale (7) de la gaine (2), un premier bouchon (4, 10) de fermeture étanche d'une première extrémité axiale de la gaine (2) du crayon (1) disposé à la partie inférieure du crayon combustible (1) dans une position de service du crayon (1) à l'intérieur du réacteur nucléaire, la gaine (2) du crayon (1) ayant son axe (7) vertical, et un second bouchon (5) de fermeture étanche de la seconde extrémité axiale de la gaine (2), la colonne de pastilles de combustible (3) reposant sur une partie interne (4a, 10a) du premier bouchon (4, 10) appelé bouchon inférieur par une première extrémité inférieure et étant maintenue à l'intérieur de la gaine tubulaire (2) par un ressort de compression (8) intercalé entre une seconde extrémité axiale, supérieure, de la colonne de pastilles de combustible (3) et une extrémité d'une partie interne du second bouchon (5) appelé bouchon supérieur, une partie interne (10a) du bouchon inférieur (10) étant engagée à l'intérieur de la gaine tubulaire (2) et comportant successivement, dans la direction axiale (7) et dans le sens allant de la première vers la seconde extrémité de la gaine (2), un premier tronçon de forme générale cylindrique (11) ayant un diamètre sensiblement égal au diamètre interne de la gaine tubulaire (2), un second tronçon de forme générale cylindrique (12) ayant un diamètre inférieur au diamètre intérieur de la gaine tubulaire (2) et un troisième tronçon de forme générale cylindrique (13) ayant un diamètre inférieur au diamètre intérieur de la gaine tubulaire (2) et supérieur au diamètre du second tronçon (12), de telle manière qu'il subsiste, entre la surface extérieure latérale du troisième tronçon (13) et la surface intérieure de la gaine tubulaire (2), un jeu radial de passage de gaz, et une surface d'extrémité (14) sensiblement plane sur laquelle repose la première extrémité de la colonne de pastilles de combustible (3), de manière qu'un espace annulaire (16) soit formé entre la surface extérieure du second tronçon (12) de la partie interne (10a) du bouchon inférieur (10) et la surface intérieure de la gaine (2), **caractérisé en ce que** le jeu radial (15) de passage de gaz est un jeu de montage compris entre un et deux dixièmes de millimètre.

2. Crayon suivant la revendication 1, dans laquelle le second tronçon (12) de la partie interne (10a) du bouchon inférieur (10) présente un diamètre compris entre 40 % et 60 % du diamètre intérieur de la gaine tubulaire (2) et une longueur dans la direction axiale comprise entre 8 et 10 fois le diamètre intérieur de la gaine tubulaire (2).

3. Crayon suivant la revendication 1 ou 2, dans laquelle au moins une partie des pastilles de combustible (3) de la colonne de pastilles de combustible renferme de l'oxyde de plutonium ou un oxyde mixte d'uranium et de plutonium.

4. Crayon suivant l'une quelconque des revendications 1 à 3, dans laquelle le crayon comporte de plus, dans au moins une zone du second tronçon (12), s'étendant dans la direction axiale, au moins une entretoise (17) constituée par une partie cylindrique élargie diamétralement du second tronçon, dont le diamètre externe est sensiblement égal au diamètre interne de la gaine tubulaire (2) diminué d'un jeu de montage.

## Claims

1. Fuel rod for a water-cooled nuclear reactor, comprising a cylindrical tubular sleeve (2), a column of nuclear fuel pellets (3) stacked one above the other inside the tubular sleeve (2) in the axial direction (7) of the sleeve (2), a first stopper (4, 10) for hermetically sealing a first axial end of the sleeve (2) of the rod (1), arranged at the lower end of the fuel rod (1) in an operating position of the rod (1) inside the nuclear reactor, the sleeve (2) of the rod (1) having its axis (7) vertical, and a second stopper (5) for hermetically sealing the second axial end of the sleeve (2), the column of fuel pellets (3) resting on an inner part (4a, 10a) of the first stopper (4, 10), referred to as the lower stopper, by a first lower end, and being held inside the tubular sleeve (2) by a compression spring (8) intercalated between a second, upper, axial end of the column of fuel pellets (3) and one end of an inner part of the second stopper (5) referred to as the upper stopper, an inner part (10a) of the lower stopper (10) engaging inside the tubular sleeve (2) and comprising successively, in the axial direction (7) and in the direction from the first to the second end of the sleeve (2), a first section of generally cylindrical shape (11) having a diameter substantially equal to the internal diameter of the tubular sleeve (2), a second section of generally cylindrical shape (12) having a diameter that is smaller than the internal diameter of the tubular sleeve (2), and a third section of generally cylindrical shape (13) having a diameter that is smaller than the internal diameter of the tubular sleeve (2) and greater than the diameter of the second section (12), such that, between the outer lateral surface of the third section (13) and the inner surface of the tubular sleeve (2), there remains a radial clearance for the passage of gas, and a substantially flat end surface (14) on which the first end of the column of fuel pellets (3) rests, so that an annular space (16) is formed between the outer surface of the second section (12) of the inner part (10a) of the lower stopper (10) and the inner surface of the sleeve (2), **characterised in that** the radial clearance (15) for the passage of gas is an assembly clearance of between one and two tenths of a millimetre.

2. Fuel rod according to claim 1, wherein the second section (12) of the inner part (10a) of the lower stopper (10) has a diameter of between 40% and 60% of the internal diameter of the tubular sleeve (2) and a length in the axial direction of between 8 and 10 times the internal diameter of the tubular sleeve (2).

3. Fuel rod according to claim 1 or 2, wherein at least some of the fuel pellets (3) in the fuel pellet column contain plutonium oxide or a mixed oxide of uranium and plutonium.

4. Fuel rod according to any one of claims 1 to 3, wherein the rod further comprises, in at least one zone of the second section (12), extending in the axial direction, at least one spacer (17) consisting of a diametrically widened cylindrical part of the second section, the external diameter of which is substantially equal to the internal diameter of the tubular sleeve (2), minus an assembly clearance.

## Patentansprüche

1. Brennstab für einen wassergekühlten Kernreaktor, mit einer zylindrischen rohrförmigen Umhüllung (2), einer Säule aus Kernbrennstofftabletten (3), die in der rohrförmigen Umhüllung (2) in axialer Richtung (7) der Umhüllung übereinander gestapelt sind, einem ersten Stopfen (4, 10) zum dichten Verschließen eines ersten axialen Endes der Umhüllung (2) des Stabs (1), der in einer Arbeitsposition des Stabs (1) im Kernreaktor im unteren Teil des Brennstabs (1) angeordnet ist, wobei die Längsachse (7) der Umhüllung (2) des Stabs (1) vertikal ist, und einem zweiten Stopfen (5) zum dichten Verschließen des zweiten axialen Endes der Umhüllung (2), wobei die Säule aus Brennstofftabletten (3) auf einem inneren Teil (4a, 10a) des ersten Stopfens (4, 10), der unterer Stopfen genannt wird, mit einem ersten, unteren Ende aufliegt und in der rohrförmigen Umhüllung (2) durch eine Druckfeder (8) gehalten wird, die zwischen ein zweites, axial oberes Ende der Brennstofftabletten-Säule (3) und ein Ende eines inneren Teils des zweiten Stopfens (5), der oberer Stopfen genannt wird, eingefügt ist, wobei ein innerer Teil (10a) des unteren Stopfens (10) mit der Innenseite der rohrförmigen Umhüllung (2) in Eingriff ist und nacheinander in der axialen Richtung (7) und in dem Richtungssinn von dem ersten zum zweiten Ende der Umhüllung (2) ein erstes Teilstück (11) mit im Allgemeinen zylindrischer Form, das einen Durchmesser besitzt, der im Wesentlichen gleich dem Innendurchmesser der rohrförmigen Umhüllung (2) ist, ein zweites Teilstück (12) mit im Allgemeinen zylindrischer Form, das einen Durchmesser besitzt, der kleiner als der Innendurchmesser der rohrförmigen Umhüllung (2) ist, und ein drittes Teilstück (13) mit im Allgemeinen zylindrischer Form, das einen Durchmesser besitzt, der kleiner als der Innendurchmesser der rohrförmigen Umhüllung (2) und größer als der Durchmesser des zweiten Teilstücks (12) ist, derart, dass zwischen der seitlich äußeren Oberfläche des dritten Teilstücks (13) und der inneren Oberfläche der rohrförmigen Umhüllung (2) ein radiales Spiel für einen Gasdurchgang vorhanden ist, und eine im Wesentlichen ebene Stirnoberfläche (14), auf der das erste Ende der Brennstofftabletten-Säule (3) aufliegt, aufweist, derart, dass zwischen der äußeren Oberfläche des zweiten Teilstücks (12) des inneren Teils (10a) des unteren Stopfens (10) und der inneren Oberfläche der Umhüllung (2) ein Ringraum (16) gebildet ist, **dadurch gekennzeichnet, dass** das radiale Spiel (15) für einen Gasdurchgang ein Montagespiel ist, das im Bereich von einem bis zwei Zehntel Millimeter liegt.

2. Stab nach Anspruch 1, wobei das zweite Teilstück (12) des inneren Teils (10a) des unteren Stopfens (10) einen Durchmesser aufweist, der im Bereich von 40 % bis 60 % des Innendurchmessers der rohrförmigen Umhüllung (2) liegt, und eine Länge in axialer Richtung aufweist, die im Bereich des 8- bis 10-fachen Innendurchmessers der rohrförmigen Umhüllung (2) liegt.

3. Stab nach Anspruch 1 oder 2, wobei wenigstens ein Teil der Brennstofftabletten (3) der Brennstofftablettensäule Plutoniumoxid oder ein Mischoxid aus Uran und Plutonium enthält.

4. Stab nach einem der Ansprüche 1 bis 3, wobei der Stab außerdem in wenigstens einer Zone des zweiten Teilstücks (12), die sich in axialer Richtung erstreckt, wenigstens einen Abstandshalter (17) enthält, der durch einen diametral erweiterten zylindrischen Teil des zweiten Teilstücks gebildet ist, dessen Außendurchmesser im Wesentlichen gleich dem Innendurchmesser der rohrförmigen Umhüllung (2), verringert um ein Montagespiel, ist.
